# FASCICULE DE BREVET EUROPEEN

(11) **EP 2 260 269 B1**
(45) Date de publication et mention de la délivrance du brevet: **15.06.2016**
(21) Numéro de dépôt: 09723463.7
(22) Date de dépôt: 06.03.2009
(51) Int. Cl.: G01D 4/00

(54) **SYSTÈME DE TRANSMISSION DE DONNÉES À PARTIR D'UN CAPTEUR DE MESURE POUR TÉLÉRELÈVE AVEC HORODATAGE.**
SYSTEM ZUR DATENÜBERTRAGUNG VON EINEM MESSSENSOR FÜR FERNPROTOKOLLIERUNG MIT ZEITSTEMPEL
SYSTEM FOR TRANSMITTING DATA FROM A MEASUREMENT SENSOR FOR REMOTE LOGGING WITH TIME STAMPING

(30) Priorité: 13.03.2008 FR 0801375
(43) Date de publication de la demande: 15.12.2010
(73) Titulaire: Suez Environnement, 75008 Paris (FR)
(72) Inventeur: BORLEE, Jean-Paul, F-91440 Bures sur Yvette (FR)
(74) Mandataire: Cabinet Armengaud Aîné
(86) Numéro de dépôt international: PCT/FR2009/000235
(87) Numéro de publication internationale: WO 2009/115708

(56) Documents cités:
- WO-A-2008/044193
- FR-A- 2 896 067
- US-A1- 2005 169 233
- US-A1- 2007 178 842

## Description

L'invention est relative à un système de transmission de données pour une télérelève entre :
- un capteur de mesure comportant un circuit électronique avec horloge interne non synchronisée et une mémoire pour stocker au moins une valeur mesurée à un premier instant (t₁) de l'horloge interne, et un émetteur propre à transmettre à un deuxième instant (t₂) de l'horloge interne la ou les valeurs mesurées au premier instant (t₁),
- et un récepteur synchronisé sur une base de temps de référence, pour recueillir les valeurs mesurées transmises.

L'invention concerne, de manière générale, les capteurs de mesures physiques, notamment les compteurs de fluide (eau, gaz, électricité, énergie thermique, répartiteur de frais de chauffage), les capteurs de températures, de pression, de débit, etc... Plus précisément, l'invention concerne les capteurs autonomes qui stockent régulièrement des valeurs de grandeurs physiques mesurées et les transmettent ultérieurement par tout moyen de transmission, par exemple par radiofréquence ou dispositif filaire.

Le nombre de capteurs distribués, c'est-à-dire disséminés sur une large surface géographique, destinés à effectuer des mesures physiques et à transmettre des données provenant de ces mesures à un récepteur de système central est en forte augmentation depuis plusieurs années. Ce nombre de capteurs est appelé encore à se développer afin d'améliorer le suivi et la gestion des équipements et réseaux de tous types, en particulier réseaux d'eau, de gaz, d'énergie, d'assainissement.

Cette multiplication du nombre de capteurs autonomes a été rendue possible par l'intégration de plus en plus aboutie des circuits électroniques des capteurs, en même temps que par la baisse de leur consommation électrique. De façon concomitante, les piles électriques, en particulier les piles au lithium, ont atteint une capacité et une fiabilité qui les rend propres à alimenter des capteurs dans de bonnes conditions pour des durées de plusieurs années, et dans certains cas jusqu'à 20 ans.

Les capteurs autonomes intègrent en général un circuit électronique à base de microprocesseur qui rend possible la lecture périodique de la ou des grandeurs physiques considérées. La période et l'instant de la lecture sont décidés sur la base de l'horloge interne du circuit électronique qui, en général, n'est pas synchronisée précisément sur une base de temps de référence, en particulier sur la base de temps universelle (UTC).

Les raisons de cette absence de synchronisation sur une base de temps de référence sont :
- d'une part, le fait que l'horloge interne du circuit électronique est composée en général d'éléments à bas coût dont la dérive journalière est importante (de l'ordre de plusieurs secondes par jour), de sorte que la dérive cumulée devient importante après plusieurs années de fonctionnement ;
- d'autre part le fait qu'une synchronisation périodique avec une référence extérieure est rendue souvent impossible car elle nécessite une liaison bidirectionnelle et régulière entre le capteur et la base de temps de référence.

Pour réduire le prix des capteurs ainsi que leur consommation, il est avantageux que ces capteurs ne mettent en oeuvre qu'une liaison unidirectionnelle pour transmettre leurs données. Autrement dit, les capteurs ne comportent pas de récepteur propre à recueillir des informations d'une base de temps de référence pour une synchronisation.

En outre, même si une liaison bidirectionnelle existait, l'horodatage ne serait pas précis dans le cas où le capteur aurait accumulé des données sur une longue période sans que la synchronisation d'horloge ait été rendue possible suite à une perte du lien de communication entre le capteur et la base de temps de référence.

Les résultats des mesures physiques effectuées par le capteur à un instant donné t₁, selon l'horloge interne, sont transmis ultérieurement à un récepteur par tout moyen adéquat, par exemple une fois par jour, au moyen d'une liaison de type filaire ou par radiofréquence, à un instant donné t₂ selon l'horloge interne.

Le récepteur des informations envoyées par les capteurs est notamment constitué par un équipement centralisateur, en particulier un système informatique, qui est synchronisé sur une base de temps de référence, généralement l'horloge UTC. Dans ces conditions, lorsque le récepteur reçoit une information d'un capteur, il peut déterminer l'instant précis T₀, selon la base de référence, à laquelle cette information est reçue.

Toutefois pour une gestion efficace par télérelève, en particulier pour des réseaux de distribution d'eau ou d'énergie, il est important de connaître avec une précision suffisante l'instant auquel la mesure a été effectuée. Une précision de l'ordre de quelques dizaines de secondes par rapport à la base de temps de référence est suffisante, par exemple, pour une détection de fuite dans une installation d'eau par mesure effectuée au cours de la nuit généralement entre 2 h et 3 h du matin, ou pour appliquer un tarif de consommation différent, en particulier pour l'énergie, selon les heures de jour ou de nuit, ou selon la période d'hiver ou d'été. Le document FR2896067 décrit un système de transmission selon l'état de la technique.

L'invention a pour but, surtout, de permettre d'établir un horodatage précis, dans une base de temps de référence, des données de mesures transmises, après stockage en mémoire, par des capteurs autonomes non synchronisés sur la base de temps de référence, notamment sur l'horloge UTC.

Selon l'invention, le système de transmission de données comprend :
- au moins un capteur de mesure, comportant un circuit électronique avec horloge interne non synchronisée et mémoire pour stocker au moins une valeur mesurée à au moins un premier instant (t₁) selon l'horloge interne, et un émetteur pour transmettre à un deuxième instant (t₂) de l'horloge interne les valeurs mesurées,
- un récepteur synchronisé sur une base de temps de référence, pour recueillir les informations transmises par le ou les capteurs,
   et est caractérisé en ce que :
- le capteur comporte un circuit électronique propre à établir la différence de temps Δt = (t₂ - t₁) entre les instants d'émission (t₂) et de mesure (t₁) selon l'horloge interne du capteur, et l'émetteur transmet, avec la ou les valeurs mesurées au premier instant (t₁), cette différence de temps Δt,
- et le récepteur comporte un circuit pour soustraire de l'instant de réception (T₀), selon la base de temps de référence, la différence de temps (Δt) transmise par l'émetteur afin de donner comme date aux mesures transmises la différence (T₀ - Δt) entre l'instant de réception (T₀) selon la base de temps de référence, et la différence de temps (Δt) entre l'émission et la mesure.

Sur de courtes périodes, de l'ordre de la journée, l'horloge interne du capteur est suffisamment précise pour que l'écart Δt reste précis, de sorte que la date calculée est parfaitement valide, à quelques secondes près suivant les cas pratiques.

L'invention permet ainsi d'effectuer un horodatage satisfaisant, a posteriori. La précision est généralement inférieure à 30 secondes sur la base de temps de référence.

Le temps de transmission entre l'émetteur et le récepteur est en général très faible, de l'ordre de 100 ms par exemple pour une transmission radiofréquence. In pourra donc en général être négligé dans les calculs. On peut toutefois en tenir compte.

L'invention concerne en particulier un capteur de mesure pour compteur de fluide, notamment un compteur d'eau.

Le système de transmission peut comporter un répéteur entre le capteur et le récepteur, ce répéteur comportant une horloge interne non synchronisée. Le répéteur reçoit à un instant (t₃) selon son horloge interne l'information provenant du capteur, et émet cette information vers le récepteur à un instant (t₄) selon son horloge interne. Selon l'invention, le répéteur comporte également un circuit électronique propre à établir la différence de temps Δt₁ = (t₄ - t₃) entre les instants d'émission (t₄) et de réception (t₃) basés sur l'horloge interne du répéteur, lequel transmet avec les valeurs mesurées cette différence de temps Δt₁ ainsi que la différence de temps Δt provenant du capteur; le récepteur comporte un circuit approprié pour déterminer l'instant de mesure en retranchant de l'instant de réception T₀, selon la base de temps de référence, la somme des différences Δt + Δt₁ fournies par le capteur et le répéteur. Le répéteur peut comporter un circuit établissant la somme des différences de temps Δt + Δt₁, et transmettre au récepteur cette somme avec les valeurs mesurées.

Dans le cas où le système de transmission comporte plusieurs répéteurs non synchronisés, selon l'invention chaque répéteur transmet, avec les informations relatives aux données mesurées, la différence de temps selon son horloge interne entre l'instant d'émission du signal et celui de réception.

Les capteurs et récepteurs sont généralement équipés de circuits électroniques du type microprocesseur et les opérations arithmétiques pour déterminer les différences Δt, Δt₁, peuvent être effectués sans circuit électronique supplémentaire en programmant le microprocesseur à cet effet.

Le message transmis par le capteur et le ou les répéteurs est avantageusement constitué par une trame comportant dans une première partie des références permettant d'identifier le capteur, dans une deuxième partie les données des valeurs mesurées par le capteur, et dans une troisième partie les différences de temps Δt, et éventuellement Δt₁, permettant de déterminer l'âge de la mesure.

L'émetteur du capteur peut comporter un condensateur qui accumule l'énergie pour permettre à l'émetteur de transmettre les données mesurées lorsque la charge du condensateur est suffisante. Les données mesurées ne sont pas émises à l'instant où la mesure est effectuée, et le temps de charge du condensateur peut varier de plusieurs minutes.

Un délai aléatoire peut être prévu entre l'instant de mesure et l'instant d'émission pour éviter des collisions et des trames mélangées entre les émissions de différents capteurs. Une redondance de l'émission est prévue, également selon un intervalle de temps aléatoire, pour éviter des collisions successives entre des émissions de différents capteurs.

De préférence, lorsque la transmission des données est effectuée par radiofréquence, une transmission VHF est mise en oeuvre. La puissance de l'émetteur du capteur peut être de l'ordre de 100 mW.

L'invention consiste, mises à part les dispositions exposées ci-dessus, en un certain nombre d'autres dispositions dont il sera plus explicitement question ci-après à propos d'un exemple de réalisation décrit avec référence aux dessins annexés, mais qui n'est nullement limitatif. Sur ces dessins :
Fig. 1 est un schéma d'un système de télérelève en réseau fixe pour compteurs de fluide, notamment compteurs d'eau, dans lequel l'invention est mise en oeuvre.
Fig. 2 est un schéma synoptique sommaire d'un capteur et d'un récepteur selon l'invention, et
Fig. 3 est un schéma d'une trame transmise.

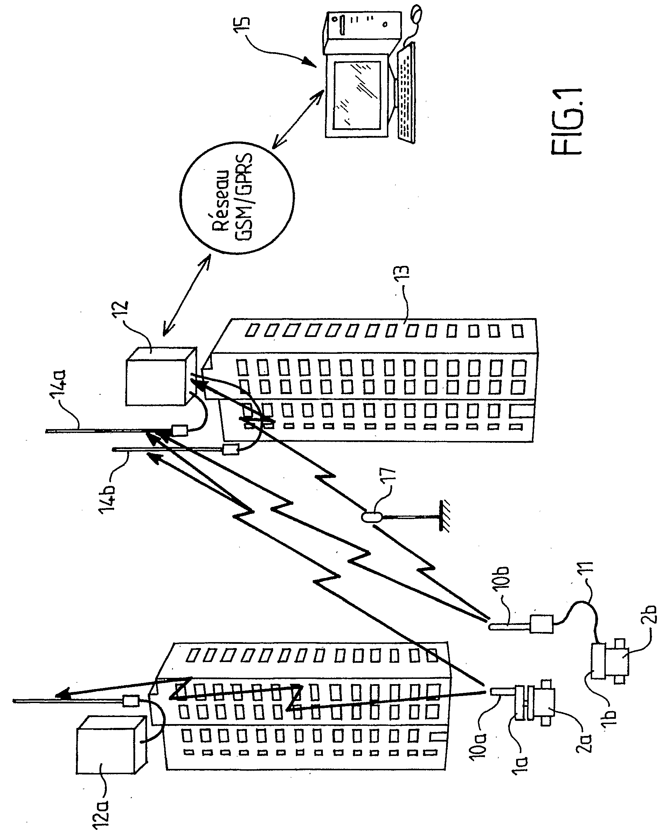

En se reportant à Fig. 1 des dessins, on peut voir un système de transmission de données à partir de capteurs de mesure 1 a, 1 b pour télérelève, notamment en réseau fixe.

L'exemple illustré sur Fig. 1 concerne des compteurs d'eau 2a, 2b, mais l'invention s'applique de manière générale à des capteurs de mesures physiques, non seulement capteurs de fluide (eau, gaz, électricité, énergie thermique, répartiteur de frais de chauffage), mais aussi capteurs de température, de pression, de débit.

Les capteurs 1 a, 1 b, sont prévus pour détecter le mouvement de rotation d'une pièce, notamment un secteur métallique, qui effectue un nombre de tours proportionnel au volume d'eau qui traverse le compteur associé.

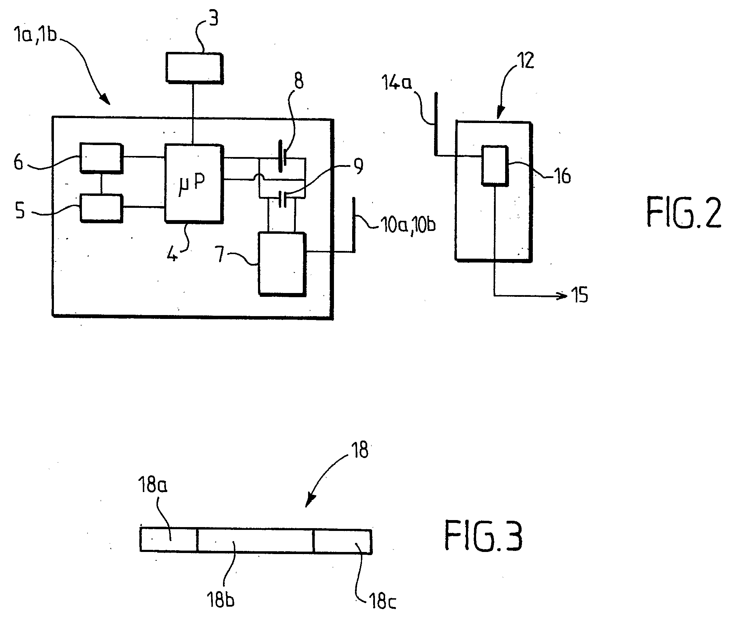

Comme illustré schématiquement sur Fig. 2 chaque capteur de mesure 1a, 1b comprend un transducteur 3 pour convertir en signal électrique le déplacement mécanique du secteur métallique du compteur. Le transducteur 3 est relié à un circuit électronique, avantageusement constitué par un microprocesseur 4, ou circuit équivalent. Une horloge interne 5 pilote le circuit 4. Le capteur est autonome et l'horloge 5 n'est pas synchronisée sur une base de temps de référence, notamment la base de temps universelle UTC. Une mémoire 6 est prévue pour stocker au moins une valeur mesurée à un premier instant t1 de l'horloge interne.

Chaque capteur comporte en outre un émetteur 7 propre à transmettre, à un deuxième instant t2 de l'horloge interne, la ou les valeurs mesurées au premier instant t1.

Une pile 8, notamment une pile au lithium, fournit l'énergie nécessaire au fonctionnement du microprocesseur 4 et de l'émetteur 7. Un condensateur 9 peut être branché aux bornes de la pile 8 et aux bornes d'alimentation de l'émetteur 7. L'alimentation de l'émetteur 7, au moment de l'émission, est assurée par la décharge de l'énergie stockée dans le condensateur 9, ce qui permet d'utiliser une pile 8 de capacité réduite. Entre deux émissions de l'émetteur 7, il faut attendre que le condensateur 9 ait atteint une charge suffisante.

L'émetteur 7 est relié à une antenne telle que 10a (Fig. 1) directement fixée sur le capteur ou une antenne déportée telle que 10b (Fig. 1) située à distance du capteur 1 b et reliée à ce dernier par un câble 11.

Au moins un récepteur 12 est prévu pour recueillir les valeurs mesurées transmises par une pluralité de capteurs disséminés sur une large surface géographique. Le récepteur 12 peut être installé sur un toit d'immeuble 13 avec un couple d'antennes 14a, 14b, espacées sur le toit de l'immeuble pour améliorer les conditions de réception.

Les informations transmises par radiofréquence par un même capteur 1 a peuvent être recueillies par plusieurs récepteurs différents, par exemple 12, 12a installés en des endroits différents.

La transmission des informations du capteur vers le récepteur est avantageusement assurée par radiofréquence VHF, et la puissance de l'émetteur 7 d'un compteur est avantageusement de l'ordre de 100 mW (milliwatts).

Le récepteur 12, 12a est synchronisé sur une base de temps de référence, notamment la base de temps universelle UTC. Le récepteur 12, 12a organise les informations recueillies et les envoie soit par voie hertzienne (réseau GSM/GPRS), soit par voie filaire, à un système d'information 15 pour la télérelève.

La liaison entre les récepteurs 12 et 12a et le système 15 est bidirectionnelle avec échange d'informations dans les deux sens. Par contre, la liaison entre les capteurs 1 a, 1 b et le récepteur 12 est unidirectionnelle, c'est-à-dire que le récepteur 12 reçoit des informations des capteurs, mais que ces derniers ne peuvent recevoir aucune information du récepteur. Cette liaison unidirectionnelle permet de simplifier la construction des capteurs 1 a, 1 b et permet aussi de réduire leur consommation. Mais du fait que l'horloge interne des capteurs n'est pas synchronisée sur une base de temps de référence, un horodatage précis des données transmises ne peut être directement établi sur la base des dates fournies par cette horloge interne.

L'invention vise à résoudre ce problème d'horodatage.

La mémoire 6 du capteur stocke la valeur mesurée à un premier instant t1 selon l'horloge interne. L'émetteur 7 transmet cette valeur mesurée à un deuxième instant t2 de l'horloge interne.

Pour assurer un horodatage suffisamment précis, le capteur 1 a, 1 b comporte un circuit électronique, constitué par le microprocesseur 4 dans le cas présent, propre à établir la différence de temps Δt = t2 - t1 entre les instants d'émission t2 et de mesure t1 selon l'horloge interne du capteur. Le microprocesseur 4 est programmé pour calculer cette différence de temps Δt.

La différence Δt est communiquée à l'émetteur 7 qui la transmet avec la ou les valeurs mesurées.

Le récepteur 12, 12a comporte un circuit 16, notamment un microprocesseur, pour soustraire de l'instant de réception T₀, selon la base de temps de référence, la différence de temps Δt transmise par l'émetteur 7. La date donnée par le récepteur aux mesures transmises est la différence T₀ - Δt entre l'instant de réception T₀ selon la base de temps de référence, et la différence de temps Δt.

La dérive de l'horloge interne du capteur sur une période relativement courte, de l'ordre de quelques heures ou de la journée, est suffisamment faible pour que l'écart Δt reste précis et que la date ainsi calculée soit parfaitement valide à quelques secondes près.

Il devient alors possible d'établir des informations sur le réseau de distribution à une heure donnée, notamment de procéder à des détections de fuite par mesure de la consommation lors d'heures creuses, par exemple entre 2 h et 3 h du matin où la consommation doit être quasiment nulle. Il devient également possible d'appliquer des tarifs différents, par exemple entre le jour et la nuit, ou entre hiver et été.

Le système de transmission peut comporter, entre le capteur 1a, 1b, et le récepteur 12, un ou plusieurs répéteurs 17 non synchronisés. Selon l'invention, chaque répéteur 17 comporte un circuit électronique qui calcule et transmet, avec les informations relatives aux données mesurées, la somme de l'écart Δt et de la différence de temps Δt1 entre l'instant d'émission t4 par le répéteur 17 et l'instant de réception t3 par ce même récepteur, basé sur son horloge interne. Le répéteur 17 transmet donc, avec les informations des valeurs mesurées, la somme Δt+Δt1.

Le récepteur 12 recueille, à l'instant de réception T₀, selon la base de temps de référence, les informations des valeurs mesurées et la somme des différences At + Δt1. Le circuit 16 du récepteur effectue la soustraction entre T₀ et (Δt + Δt1) pour dater la mesure à l'instant T₀ - (Δt + Δt1).

En variante, le répéteur peut ne pas faire le calcul de la somme Δt + Δt1, laquelle est effectuée dans le récepteur 12 à partir des valeurs Δt et Ait1 transmises par le répéteur 17 avec les résultats de mesures.

En cas de plusieurs répéteurs, les différences Δtn introduites par chaque répéteur seraient prises en compte.

Le message transmis par un capteur, ainsi que par un répéteur, est constitué par une trame 18 schématiquement représentée sous forme d'une bande rectangulaire sur Fig. 3, comportant : dans une première partie 18a des références permettant d'identifier le capteur 1 a, 1 b ; dans une deuxième partie 18b les données des valeurs mesurées par le capteur, et dans une troisième partie 18c les différences de temps Δt, et éventuellement Δt1, permettant de déterminer l'âge de la mesure.

De préférence, l'émission des informations par le capteur 1a, 1b est redondante, avec des intervalles de temps aléatoires entre les émissions répétées successives, pour éviter des collisions et des trames mélangées entre les émissions de différents capteurs.

La redondance trois ou quatre fois, notamment avec un intervalle de quelques heures, en particulier de l'ordre de 6 h, permet d'éviter la perte d'informations en raison d'un obstacle temporaire, par exemple un camion stationné faisant obstacle à une bonne transmission.

L'invention rend possible un horodatage précis de données émises par des capteurs non synchronisés, unidirectionnels.

## Revendications

1. Système de transmission de données pour une télérelève comprenant :
- un capteur de mesure (1a, 1b) comportant un circuit électronique avec horloge interne non synchronisée et une mémoire pour stocker au moins une valeur mesurée à un premier instant (t₁) de l'horloge interne, et un émetteur (7) propre à transmettre à un deuxième instant (t₂) de l'horloge interne la ou les valeurs mesurées au premier instant (t₁),
- et un récepteur (12, 12a) synchronisé sur une base de temps de référence, pour recueillir les valeurs mesurées transmises,
**caractérisé en ce que** :
- le capteur (1a, 1b) comporte un circuit électronique (4) propre à établir la différence de temps Δt = (t₂ - t₁) entre les instants d'émission (t₂) et de mesure (t₁) selon l'horloge interne du capteur, et l'émetteur (7) transmet, avec la ou les valeurs mesurées au premier instant (t₁), cette différence de temps Δt,
- et le récepteur comporte un circuit (16) pour soustraire de l'instant de réception (T₀), selon la base de temps de référence, la différence de temps (Δt) transmise par l'émetteur afin de donner comme date aux mesures transmises la différence (T₀ - Δt) entre l'instant de réception (T₀) selon la base de temps de référence, et la différence de temps (Δt) entre l'émission et la mesure.

2. Système de transmission de données selon la revendication 1, **caractérisé en ce que** le capteur de mesure est un capteur pour compteur de fluide, notamment un compteur d'eau.

3. Système de transmission de données selon la revendication 1, comportant un répéteur entre le capteur et le récepteur, le répéteur comportant une horloge interne non synchronisée,
**caractérisé en ce que** le répéteur (17) qui reçoit à un instant (t₃) selon son horloge interne l'information provenant du capteur, et émet cette information vers le récepteur à un instant (t₄) selon son horloge interne, comporte un circuit électronique propre à établir la différence de temps Δt₁ = (t₄ - t₃) entre les instants d'émission (t₄) et de réception (t₃) basés sur l'horloge interne du répéteur, lequel transmet avec les valeurs mesurées, cette différence de temps Δt₁ ainsi que la différence de temps Δt provenant du capteur, le récepteur (12, 12a) comportant un circuit approprié pour déterminer l'instant de mesure en retranchant de l'instant de réception T₀, selon la base de temps de référence, la somme des différences Δt + Δt₁ fournies par le capteur et le répéteur.

4. Système de transmission de données selon la revendication 3, **caractérisé en ce que** le répéteur (17) comporte un circuit établissant la somme des différences de temps Δt + Δt₁, et transmet au récepteur (12, 12a) cette somme avec les valeurs mesurées.

5. Système de transmission de données selon l'une quelconque des revendications précédentes, **caractérisé en ce que** les capteurs et récepteurs sont équipés de circuits électroniques du type microprocesseur programmés pour effectuer les opérations arithmétiques afin de déterminer les différences de temps Δt, Δt₁, ainsi que les sommes (Δt+ Δt1) de ces différences.

6. Système de transmission de données selon l'une quelconque des revendications précédentes, **caractérisé en ce que** l'émetteur (7) du capteur comporte un condensateur (9) qui accumule l'énergie pour permettre à l'émetteur de transmettre les données mesurées lorsque la charge du condensateur est suffisante.

7. Système de transmission de données selon l'une quelconque des revendications précédentes, **caractérisé en ce que** le message transmis par le capteur est constitué par une trame (18) comportant dans une première partie (18a) des références permettant d'identifier le capteur, dans une deuxième partie (18b) les données des valeurs mesurées par le capteur, et dans une troisième partie (18c) les différences de temps Δt, et éventuellement Δt₁, permettant de déterminer l'âge de la mesure.

8. Système de transmission de données selon l'une quelconque des revendications précédentes, **caractérisé en ce que** la transmission des données est effectuée par radiofréquence VHF

9. Système de transmission de données selon la revendication 8, **caractérisé en ce que** la puissance de l'émetteur (7) du capteur est de l'ordre de 100 mW.

## Patentansprüche

1. Datenübertragungssystem zur Fernablesung, bestehend aus
- einem Messfühler (1a, 1b), der einen elektronischen Schaltkreis mit nicht synchronisierter interner Uhr und einem Speicher, um mindestens einen, zu einem ersten Zeitpunkt (t₁) der internen Uhr gemessenen Wert zu speichern, und einen Sender (7), der geeignet ist, zu einem zweiten Zeitpunkt (t₂) der internen Uhr den oder die zum ersten Zeitpunkt (t₁) gemessenen Wert(e) zu übertragen, enthält,
- und einem auf einer Referenzzeitbasis synchronisierten Empfänger (12, 12a), um die übertragenen Messwerte zu erfassen,
**dadurch gekennzeichnet, dass**
- der Messfühler (1a, 1b) einen elektronischen Schaltkreis (4) enthält, der geeignet ist, die Zeitdifferenz Δt = (t₂ - t₁) zwischen dem Sendezeitpunkt (t₂) und dem Messzeitpunkt (t₁) gemäß der internen Uhr des Fühlers zu ermitteln, und der Sender (7) diese Zeitdifferenz Δt mit dem oder den zum ersten Zeitpunkt (t₁) gemessen Wert(en) überträgt,
- und der Empfänger einen Schaltkreis (16) enthält, um vom Empfangszeitpunkt (T₀) gemäß der Referenzzeitbasis die vom Sender übertragene Zeitdifferenz (Δt) abzuziehen, um die Differenz (T₀ - Δt) zwischen dem Empfangszeitpunkt (T₀) gemäß der Referenzzeitbasis und die Zeitdifferenz (Δt) zwischen dem Senden und der Messung den übertragenen Messwerten als Zeitangabe zuzuordnen.

2. Datenübertragungssystem nach Anspruch 1, **dadurch gekennzeichnet, dass** der Messfühler ein Fühler für Flüssigkeitszähler, insbesondere für einen Wasserzähler ist.

3. Datenübertragungssystem nach Anspruch 1, das zwischen dem Fühler und dem Empfänger einen Repeater enthält, wobei der Repeater eine nicht synchronisierte interne Uhr enthält,
**dadurch gekennzeichnet, dass** der Repeater (17), der zu einem Zeitpunkt (t₃) gemäß seiner internen Uhr die vom Fühler kommende Information empfängt und diese Information zu einem Zeitpunkt (t₄) gemäß seiner internen Uhr an den Empfänger sendet, einen elektronischen Schaltkreis enthält, der geeignet ist, die Zeitdifferenz Δt₁ = (t₄ - t₃) zwischen den auf der internen Uhr des Repeaters basierenden Sendezeitpunkten (t₄) und Empfangszeitpunkten (t₃) zu ermitteln, und der mit den Messwerten diese Zeitdifferenz Δt₁ sowie die vom Fühler kommende Zeitdifferenz Δt überträgt, wobei der Empfänger (12, 12a) einen Schaltkreis umfasst, der geeignet ist, den Messzeitpunkt zu ermitteln, indem er vom Empfangszeitpunkt T₀ gemäß der Referenzzeitbasis die Summe der vom Fühler und vom Repeater bereitgestellten Differenzen Δt + Δt₁ abzieht.

4. Datenübertragungssystem nach Anspruch 3, **dadurch gekennzeichnet, dass** der Repeater (17) einen Schaltkreis enthält, der die Summe der Zeitdifferenzen Δt + Δt₁ ermittelt und diese Summe mit den Messwerten an den Empfänger (12, 12a) überträgt.

5. Datenübertragungssystem nach einem beliebigen der vorangehenden Ansprüche, **dadurch gekennzeichnet, dass** die Fühler und Empfänger mit elektronischen Schaltkreisen vom Typ Mikroprozessor ausgestattet sind, die für die Ausführung von arithmetischen Operationen programmiert sind, um die Zeitdifferenzen Δt, Δt₁ sowie die Summen (Δt + Δt₁) dieser Differenzen zu bestimmen.

6. Datenübertragungssystem nach einem beliebigen der vorangehenden Ansprüche, **dadurch gekennzeichnet, dass** der Sender (7) des Fühlers einen Kondensator (9) enthält, der Energie ansammelt, um es dem Sender zu ermöglichen, die Messdaten zu übertragen, sobald der Kondensator ausreichend geladen ist.

7. Datenübertragungssystem nach einem beliebigen der vorangehenden Ansprüche, **dadurch gekennzeichnet, dass** die vom Fühler übertragene Nachricht aus einem Rahmen (18) besteht, der in einem ersten Teil (18a) Bezugsangaben zur Identifizierung des Fühlers, in einem zweiten Teil (18b) die Daten der vom Fühler gemessenen Werte und in einem dritten Teil (18c) die Zeitdifferenzen Δt und eventuell Δt₁ zur Bestimmung des Alters der Messung enthält.

8. Datenübertragungssystem nach einem beliebigen der vorangehenden Ansprüche, **dadurch gekennzeichnet, dass** die Übertragung der Daten über VHF-Funkfrequenz erfolgt.

9. Datenübertragungssystem nach Anspruch 8, **dadurch gekennzeichnet, dass** die Leistung des Senders (7) des Fühlers bei 100 mW liegt.

## Claims

1. Data transmission system for remote logging comprising:
- a measurement sensor (1a, 1b), comprising an electronic circuit with a non-synchronized internal clock and a memory for storing at least one value measured at a first time (t₁) of the internal clock, and a transmitter (7) capable of transmitting, at a second time (t₂) of the internal clock, the value or values measured at the first time (t₁),
- and a receiver (12, 12a) synchronized to a reference time base for gathering the transmitted measured values,
**characterized in that**:
- the sensor (1a, 1b) comprises an electronic circuit (4) capable of establishing the time difference Δt = (t₂ - t₁) between the times of transmission (t₂) and of measurement (t₁) according to the internal clock of the sensor, and the transmitter (7) transmits, with the value or values measured at the first time (t₁), this time difference Δt,
- and the receiver comprises a circuit (16) for subtracting from the time of reception (T₀), according to the reference time base, the time difference (Δt) transmitted by the transmitter in order to give the difference (T₀ - Δt) between the time of reception (T₀), according to the reference time base, and the time difference (Δt) between the transmission and the measurement as a time stamp to the transmitted measurements.

2. Data transmission system according to Claim 1, **characterized in that** the measurement sensor is a sensor for a fluid meter, a water meter in particular.

3. Data transmission system according to Claim 1, comprising a repeater between the sensor and the receiver, the repeater comprising a non-synchronized internal clock,
**characterized in that** the repeater (17) which receives, at a time (t₃) according to its internal clock, the information coming from the sensor and transmits this information to the receiver at a time (t₄), according to its internal clock, comprises an electronic circuit capable of establishing the time difference Δt₁ = (t₄ - t₃) between the times of transmission (t₄) and reception (t₃), based on the internal clock of the repeater, which transmits the measured values together with this time difference Δt₁ and the time difference Δt coming from the sensor, the receiver (12, 12a) comprising a circuit suitable for determining the measurement time by subtracting from the time of reception To, according to the reference time base, the sum of the differences Δt + Δt₁ provided by the sensor and the repeater.

4. Data transmission system according to Claim 3, **characterized in that** the repeater (17) comprises a circuit establishing the sum of the time differences Δt + Δt₁ and transmits this sum to the receiver (12, 12a) with the measured values.

5. Data transmission system according to any one of the preceding claims, **characterized in that** the sensors and receivers are equipped with electronic circuits of the microprocessor type programmed for carrying out the arithmetic operations in order to determine the time differences Δt, Δt₁, and the sums (Δt + Δt₁ of these differences.

6. Data transmission system according to any one of the preceding claims, **characterized in that** the transmitter (7) of the sensor comprises a capacitor (9) which accumulates the energy to make it possible for the transmitter to transmit the measured data when the charge of the capacitor is sufficient.

7. Data transmission system according to any one of the preceding claims, **characterized in that** the message transmitted by the sensor is constituted by a frame (18) comprising in a first part (18a) references making it possible to identify the sensor, in a second part (18b) the data of the values measured by the sensor, and in a third part (18c) the time differences Δt, and possibly Δt1, making it possible to determine the age of the measurement.

8. Data transmission system according to any one of the preceding claims, **characterized in that** the data transmission is carried out by VHF radio.

9. Data transmission system according to Claim 8, **characterized in that** the power of the transmitter (7) of the sensor is of the order of 100 mW.
